# EUROPÄISCHE PATENTSCHRIFT

(11) **EP 0 754 292 B1**
(45) Veröffentlichungstag und Bekanntmachung des Hinweises auf die Patenterteilung: **09.06.1999**
(21) Anmeldenummer: 95915053.3
(22) Anmeldetag: 05.04.1995
(51) Int. Cl.: G01D 5/39, G01D 18/00

(54) **VERFAHREN ZUR ÜBERPRÜFUNG DER TOLERANZ VON MESSWERTEN**
PROCESS FOR CHECKING THE TOLERANCE OF MEASURED VALUES
PROCEDE POUR LE CONTROLE DE LA TOLERANCE DE VALEURS MESUREES

(30) Priorität: 07.04.1994 AT 71794
(43) Veröffentlichungstag der Anmeldung: 22.01.1997
(73) Patentinhaber: Elin Wasserwerkstechnik Gesellschaft m.b.H., A-1031 Wien (AT)
(72) Erfinder: SAMPL, Gottfried, A-3423 St. Andrä-Wördern (AT); ZENKER, Wilfried, A-1190 Wien (AT)
(74) Vertreter: Rieberer, Stefan, Dipl.-Ing.
(86) Internationale Anmeldenummer: AT9500068
(87) Internationale Veröffentlichungsnummer: WO9527884

(56) Entgegenhaltungen:
- EP-A- 0 279 759
- US-A- 4 953 386
- 1985 IEEE International Conference on Robotics and Automation, March 25-28 1985 Marriott's Pavilion Hotel, St. Louis, Missouri, pages 100-107; I. Masaki, 'Parallel/pipelined processor dedicated to visual recognition.'

## Beschreibung

Die Erfindung betrifft ein Verfahren zur Überprüfung der Toleranz von Meßwerten, welche auf summierenden Meßgeräten, wie Elektrizitätszählern und Wasserzählern, analog und/oder digital angezeigt werden, wobei mit einer optischen Aufnahmeeinrichtung die Meßgerätevorderseite aufgenommen wird, und dieses Bild in einem Rechner digitalisiert wird.

Bisher müssen bei der Kalibrierung von Zeiger- und mechanischen Rollenzählwerkmeßgeräten die Meßwerte von autorisierten Personen vom Prüfling und von einem geeichten Meßgerät abgelesen und aufgenommen werden. Dabei kann es vor allem bei den summierenden Rollenzählwerken, wie sie bei Elektrizitätszählern und Wasserzählern üblich sind, zu Ableseund Differenzbildungsfehlern durch das Personal kommen. Bei der anschließenden Justierung ist daher die Wahrscheinlichkeit, daß ein bestehender Meßfehler noch vergrößert wird, sehr groß. Dies ist für den Benützer bzw. Kunden solcher Meßgeräte besonders dann unangenehm, wenn der tatsächliche kWh- oder Wasserverbrauch geringer ist, als der am Meßgerät angezeigte und von der zuständigen Behörde verrechnete Verbrauch.

In der EP 0 279 759 A1 ist eine Anordnung und ein Verfahren zur Aufnahme von auf Meßgeräten angezeigten Werten beschrieben. Die Aufnahme erfolgt mit einer Einrichtung die eine Kamera aufweist. Aus dem mit der Kamera aufgenommenen Bild wird der Meßwert herausgefiltert und als Digitalsignal aufbereitet. Mit dieser Einrichtung können nur digital angezeigte Meßwerte aufgenommen werden. Weiters weist die Einrichtung auch einen Mechanismus auf mit dem die Kamera nur auf die Anzeige des Meßgerätes eingestellt werden kann.
Ein Verfahren zur Überprüfung der Toleranz von Meßwerten ist in dieser veröffentlichten europäischen Anmeldung nicht beschrieben.

Aus der US-A-4 953 386 ist eine Methode und eine Vorrichtung zur Prüfung von elektronischen Gaszählern bekannt. Dabei werden die Impulse eines geeichten Gaszählers für ein bestimmtes Gasvolumen mit den Impulsen beim Prüfling beim gleichen Gasvolumen verglichen, und daraus die Genauigkeit des Prüflings ermittelt.

In der 1985 IEEE INTERNATIONAL CONFERENCE ON ROBOTICS AND AUTOMATION, 25-28. März (ISBN 0-8186-0615-0) ist die Anwendung von Bildkorrelatoren zur Erkennung von übereinanderliegenden Werkstücken beschrieben.

Die Aufgabe der Erfindung besteht nun darin, ein Verfahren zu schaffen, mit dem eine Meßwerterfassung, sowie eine Feststellung der Toleranz der Meßwerte ohne Einwirken von Personen erfolgt.

Die Aufgabe wird durch die Erfindung gelöst. Diese ist dadurch gekennzeichnet, daß die Meßgerätevorderseite nach wählbaren Zeitintervallen aufgenommen wird, daß im Rechner aus den digitalisierten Bilddaten mit einer modifizierten Hough-Transformation oder einem geeigneten Algorithmus, mit gespeicherten geometrischen Grundfiguren, wie Gerade, Rechteck, Kreis, usw. und gespeicherten optischen Meßgerätecharakteristika, wie Positionen von Kreisbögen, Zeigern und Rechtecken, eine Meßgerätetypenidentifikation durchgeführt wird und anschließend der am Meßgerät angezeigte Meßwert ermittelt wird, und daß im Rechner entweder Meßwerte mit gespeicherten zeitgleichen Sollwerten verglichen werden oder im Rechner die Differenz von Meßwerten, insbesondere von zwei aufeinanderfolgenden, gebildet wird, und diese mit der zeitgleichen Differenz, die dem Sollwert entspricht, von zwei aus konstanter oder variabler Meßgrößenzunahme über der Zeit berechneten und gespeicherten tatsächlichen Größen, verglichen wird.

Mit diesem Verfahren wird der Kalibrierungsvorgang automatisiert, d.h. die Ablesung des Anfangs- und Endwertes, sowie die Berechnung des gemessenen Wertes erfolgt automatisch. Ein Eingreifen durch das Bedienungspersonal erfolgt nur mehr im Fehlerfall des Systems. Weitere Vorteile sind, Fehlerminimierung durch Minimierung der Ablesefehler, Effizienzsteigerung durch die Steigerung der Ablesegeschwindigkeit und Qualitätssicherung im Fertigungsablauf der Meßgeräte durch automatisierte Qualitätskontrolle.

Von Vorteil ist, daß die Meßgerätevorderseite während der Aufnahme beleuchtet wird. Dadurch ist der Kontrast des aufgenommenen Bildes verbessert, wodurch der angezeigte Meßwert im Rechner eindeutig identifiziert wird.

Bei der Anordnung zur Überprüfung der Toleranz von Meßwerten, welche auf summierenden Meßgeräten, wie Elektrizitätszählern und Wasserzählern analog und/oder digital angezeigt werden, welche eine optische Aufnahmeeinrichtung zur Aufnahme der Meßgerätevorderseite und einen Rechner zur Digitalisierung und Verarbeitung dieses Bildes gemäß dem erfindungsgemäßen Verfahren aufweist, ist vorgesehen, daß die Vorderseite des Meßgerätes, durch welches ein zu registrierendes Medium fließen kann, auf eine an einem Stativ befestigte optische Aufnahmeeinrichtung gerichtet ist, die eine CCD-Kamera ist, daß an der Rückseite des Meßgerätes eine kontrastreiche Unterlage vorgesehen ist, daß rund um das Objektiv der CCD Kamera eine Beleuchtung vorgesehen ist, welche die Meßgerätevorderseite für eine kontrastreiche Aufnahme aufhellt, und daß die Kamera über einen Framegrabber, der die analogen Bildsignale von der Kamera in Digitalsignale umwandelt, mit dem Rechner, der ein Digitalrechner ist, verbunden ist.

Dies ist eine der möglichen Konfigurationen zur digitalen Erfassung der Meßgerätevorderseite und somit auch des Meßwertes.

In der CCD-Kamera ist ein CCD-Halbleitersensor eingebaut, der aus MOS-Kondensatoren oder MOS-Fotodioden besteht, die auf einem Silizium-Substrat (charged-coupled-devices) aufgebracht sind.

Die Erfindung wird nun anhand der Zeichnungen noch näher erläutert.

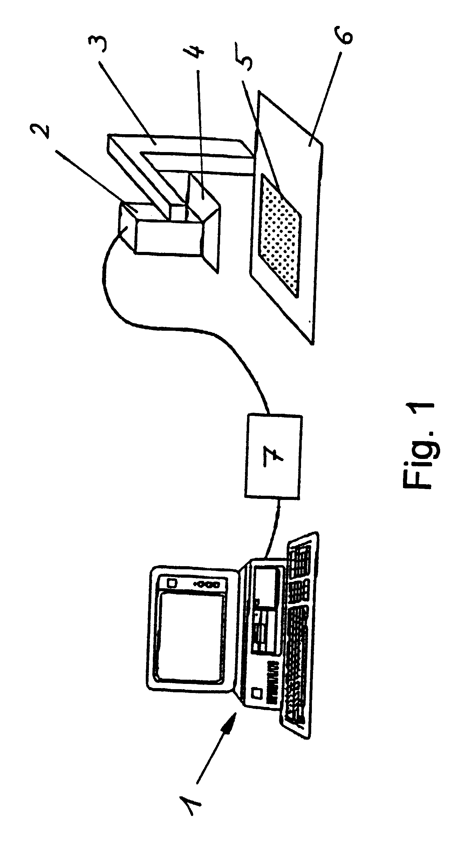

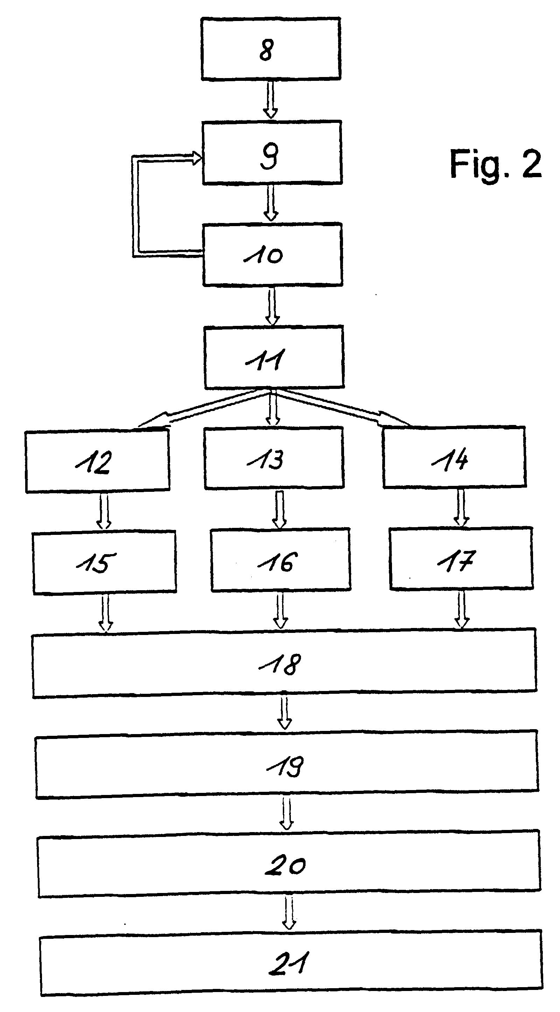

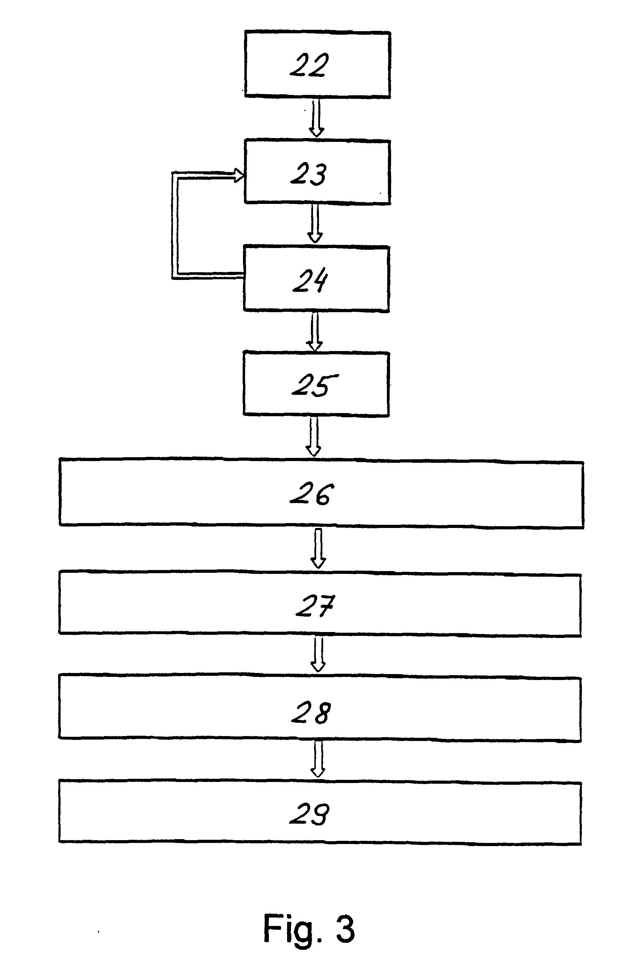

Die Fig. 1 zeigt vereinfacht die Anordnung zur Durchführung des Verfahrens, in Fig. 2 ist das Flußdiagramm zur Anfangsstandsauswertung eines Meßwertes und in Fig. 3 ist das Flußdiagramm zur Endstandsauswertung und Meßwertberechnung für ein bestimmtes Zeitintervall dargestellt. Im folgenden ist unter einem zu registrierenden Medium die durch Meßgeräte zu erfassende chemische oder physikalische Substanz, z.B. Wasser bei einem Wasserzähler oder elektrische Energie bei einem Elektrizitätszähler zu verstehen.

Bei Fig. 1 ist unter dem schematisch dargestellten Meßgerät 5, durch welches das zu registrierende Medium fließt, eine kontrastreiche Unterlage 6 vorgesehen. Die Vorderseite des Meßgerätes 5 zeigt dabei nach oben. Über dem Meßgerät 5 ist auf einem Stativ 3 eine optische Aufnahmeeinrichtung 2, die eine CCD-Kamera ist, befestigt. Rund um das Objektiv dieser Kamera 2 ist eine Beleuchtung 4 vorgesehen, welche die Meßgerätevorderseite für eine kontrastreiche Aufnahme ausreichend aufhellt. Die Kamera 2 ist über eine Framegrabberkarte 7, die die analogen Bildsignale von der Kamera 2 in Digitalsignale umwandelt, mit einem Digitalrechner 1 verbunden. Im Digitalrechner 1 werden nach wählbaren Zeitintervallen, mit geeigneten Algorithmen, z.B. einer modifizierten Hough-Transformation, mit gespeicherten Primitiva, wie Gerade, Rechteck, Kreis, usw. und gespeicherten optischen Meßgerätecharakteristika am Meßgerät 5 angezeigte Meßwerte ermittelt. Durch Differenzbildung einzelner Meßwerte und Vergleich mit der zeitgleichen Differenz von ebenfalls mit einer Kamera 2 aufgenommenen und im Digitalrechner 1 gespeicherten Meßwerten von einem nicht dargestellten Referenzmeßgerät wird die Toleranz des Meßgerätes 5 ermittelt.

Bei dem Flußdiagramm in Fig. 2, welches den Ablauf zur Erfassung eines Meßwertes bei einem Wasserzähler darstellt, folgt dem Meßbeginn 8 die optische Aufnahme des Anfangsstandes 9, wobei anschließend schon vom Digitalrechner 1 eine Aufnahmequalitätsprüfung 10 durchgeführt wird. Ist die Aufnahmequalitätsprüfung 10 negativ, so erfolgt eine nochmalige Aufnahme mit verbesserter Schärfe. Nach einer anschließenden Kontrastverbesserung 11, wird eine Kreis- 12, Zeiger- 13 und Liniendetektion 14 durchgeführt. Bei der Kreisdetektion 12 erfolgt danach eine Bestimmung der Position der Kreisbögen 15 und anschließend an die Zeigerdetektion 13 wird die Position der Zeiger 16 bestimmt. Der Liniendetektion 14 folgt eine Feststellung einerseits der Lage der Meßgerätevorderseite 17 und andererseits aller am Meßgerät 5 befindlichen Rechteckpositionen 17. Mit den Positionen von Kreisbögen 15, Zeigern 16 und Rechtecken 17 wird eine Zähleridentifikation mittels Primitiva und Beschreibungssprache 18 durchgeführt. Anschließend erfolgt eine Kontrolle 19 durch Zusatzelemente der in der Beschreibungssprache enthaltenen Layoutelemente. Danach wird die Meßwertanzeige mit den detektierten Anzeigenelementen ausgewertet 20. Abschließend werden Meßwert, Meßgerätetyp und Position der Primitiva im Digitalrechner 1 gespeichert.

Beim Flußdiagramm in Fig. 3, das ebenfalls für einen Wasserzähler gilt, folgt dem Meßvorgang 22 die optische Aufnahme des Endstandes 23, wobei anschließend wieder vom Digitalrechner 1 eine Aufnahmequalitätsprüfung 24 durchgeführt wird. Ist die Aufnahmequalitätsprüfung 24 negativ, so erfolgt auch hier eine nochmalige Aufnahme mit verbesserter Schärfe. Nach anschließender Kontrastverbesserung 25 erfolgt eine Überprüfung 26 der Primitiva Positionen und danach eine Auswertung 27 der Meßwertanzeige mit den detektierten Anzeigenelementen. Durch Subtraktion 28 des Anfangswertes vom Endwert erhält man den Verbrauch pro Zeitintervall, der z.B. am Bildschirm des Digitalrechners 1 ausgegeben 29 bzw. angezeigt wird.

## Patentansprüche

1. Verfahren zur Überprüfung der Toleranz von Meßwerten, welche auf summierenden Meßgeräten, wie Elektrizitätszählern und Wasserzählern analog und/oder digital angezeigt werden, wobei mit einer optischen Aufnahmeeinrichtung die Meßgerätevorderseite aufgenommen wird, und dieses Bild in einem Rechner digitalisiert wird, **dadurch gekennzeichnet, daß** die Meßgerätevorderseite nach wählbaren Zeitintervallen aufgenommen wird, **daß** im Rechner aus den digitalisierten Bilddaten mit einer modifizierten Hough-Transformation oder einem geeigneten Algorithmus, mit gespeicherten geometrischen Grundfiguren, wie Gerade, Rechteck, Kreis, usw. und gespeicherten optischen Meßgerätecharakteristika, wie Positionen von Kreisbögen, Zeigern und Rechtecken, eine Meßgerätetypenidentifikation durchgeführt wird und anschließend der am Meßgerät angezeigte Meßwert ermittelt wird, **und daß** im Rechner entweder Meßwerte mit gespeicherten zeitgleichen Sollwerten verglichen werden oder im Rechner die Differenz von Meßwerten, insbesondere von zwei aufeinanderfolgenden, gebildet wird, und diese mit der zeitgleichen Differenz, die dem Sollwert entspricht, von zwei aus konstanter oder variabler Meßgrößenzunahme über der Zeit berechneten und gespeicherten tatsächlichen Größen, verglichen wird.

2. Verfahren nach Anspruch 1, **dadurch gekennzeichnet, daß** die Meßgerätevorderseite während der Aufnahme beleuchtet wird.

3. Anordnung zur Überprüfung der Toleranz von Meßwerten, welche auf summierenden Meßgeräten, wie Elektrizitätszählern und Wasserzählern analog und/oder digital angezeigt werden, welche eine optische Aufnahmeeinrichtung zur Aufnahme der Meßgerätevorderseite und einen Rechner zur Digitalisierung und Verarbeitung dieses Bildes gemäß einem der Ansprüche 1 oder 2 aufweist, **dadurch gekennzeichnet**, daß die Vorderseite des Meßgerätes, durch welches ein zu registrierendes Medium fließen kann, auf eine an einem Stativ befestigte optische Aufnahmeeinrichtung gerichtet ist, die eine CCD-Kamera ist, **daß** an der Rückseite des Meßgerätes eine kontrastreiche Unterlage vorgesehen ist, **daß** rund um das Objektiv der CCD Kamera eine Beleuchtung vorgesehen ist, welche die Meßgerätevorderseite für eine kontrastreiche Aufnahme aufhellt, **und daß** die Kamera über einen Framegrabber, der die analogen Bildsignale von der Kamera in Digitalsignale umwandelt, mit dem Rechner, der ein Digitalrechner ist, verbunden ist.

## Claims

1. Process for checking the tolerance of measured values indicated in an analogous and/or digital form on summing measuring instruments, such as electricity meters and water meters, wherein the front side of the measuring instrument is recorded by an optical take-up device, and the picture is digitised in a calculator, **characterised in that** the front side of the measuring instrument is registered at selectable intervals of time, **that** an identification of the type of measuring instrument is carried out in the calculator from the digitised picture data by a modified Hough transformation or any suitable algorithm including memorised geometrical basic outlines, such as a straight line, a rectangle, a circle and so on, and memorised optical characteristics of measuring instruments, such as positions of an arc of a circle, pointers and rectangles, after which the measuring value indicated by the measuring instrument is determined, **and that** in the calculator either measuring values are compared with memorised isochronic nominal values, or the difference of measuring values, particularly of two subsequent ones, is formed in the calculator and is compared with the isochronic difference, corresponding to the nominal value, of two actual magnitudes calculated and memorised from two constant or variable increases of measuring values over time.

2. Process according to claim 1, **characterised in that** the front side of the measuring instrument is illuminated during recording.

3. Arrangement for checking the tolerance of measured values indicated in an analogous and/or digital form on summing measuring instruments, such as electricity meters and water meters, which comprises an optical take-up device for recording the front side of the measuring instrument and a calculator for digitising and processing this picture in accordance with one of claims 1 or 2, **characterised in that** the front side of the measuring instrument, through which a medium to be recorded can flow, is directed towards an optical take-up device, which is a CCD camera, mounted on a tripod, **that** a contrasting base is provided at the back side of the measuring instrument, **that** a lighting which illuminates the front side of the measuring instrument for high contrast recording is provided around the objective of the CCD camera, **and that** the camera is coupled to the calculator, which is a digital calculator, via a frame-grabber which converts the analogous picture signals of the camera into digital signals.

## Revendications

1. Procédé pour le contrôle de la tolérance de valeurs mesurées, affichées de manière analogique et/ou numérique sur des appareils de mesure sommateurs, tels que des compteurs d'électricité et des compteurs d'eau, où avec un dispositif d'enregistrement optique la face avant de l'appareil de mesure est enregistrée et cette image est numérisée dans un ordinateur, caractérisé en ce que la face avant de l'appareil de mesure est enregistrée suivant des intervalles de temps sélectionnables, en ce que dans l'ordinateur, à partir des données image ayant été numérisées, avec une transformation de Hough modifiée ou bien un algorithme approprié, avec des figures de base géométriques, mémorisées, telles qu'une droite, un rectangle, un cercle, etc., et des caractéristiques optiques d'appareil de mesure mémorisées, telles que les positions d'arcs de cercle, d'aiguilles et de rectangles, est effectuée une identification du type d'appareil de mesure et, ensuite, la valeur de mesure affichée sur l'appareil de mesure étant déterminée, et en ce que soit est effectuée dans l'ordinateur une comparaison de valeurs de mesure à des valeurs de consigne isochrone mémorisées, soit est constituée dans l'ordinateur la différence entre des valeurs de mesure, en particulier entre deux valeurs de mesure successives, et celle-ci est comparée à la différence isochrone, qui correspond à la valeur de consigne, entre deux grandeurs effectives, calculées à partir de l'augmentation, constante ou variable, des grandeurs mesurées en fonction du temps, et mémorisées.

2. Procédé selon la revendication 1, caractérisé en ce que la face avant de l'appareil de mesure est illuminée pendant l'enregistrement.

3. Dispositif pour le contrôle de la tolérance de valeurs de mesure, qui sont affichées de manière analogique et/ou numérique sur les appareils de mesure sommateurs, tels que des compteurs d'électricité et des compteurs d'eau, dispostif qui présente un dispositif d'enregistrement optique destiné à enregistrer la face de l'appareil et un ordinateur pour numériser et traiter cette image, selon l'une des revendications 1 ou 2, caractérisé en ce que la face avant de l'appareil de mesure, à travers lequel peut s'écouler un fluide à enregistrer, est dirigée sur un dispositif d'enregistrement optique, fixé sur un pied, qui est une caméra CCD, en ce qu'en face arrière de l'appareil de mesure est prévu un fond support à fort contraste, et en ce que, tout autour de l'objectif de la caméra CCD, est prévue une illumination qui éclaire la face avant de l'appareil de mesure afin de permettre un enregistrement riche en contraste, et en ce que la caméra est reliée, par un capteur d'image qui convertit en des signaux numériques les signaux image analogiques venant de la caméra, à l'ordinateur, qui est un ordinateur numérique.
